# EUROPEAN PATENT SPECIFICATION

(11) **EP 3 032 045 B1**
(45) Date of publication and mention of the grant of the patent: **03.10.2018**
(21) Application number: 15197690.9
(22) Date of filing: 03.12.2015
(51) Int. Cl.: F01D 25/02, F02C 7/047, F02K 3/06, F02C 7/14, B64D 33/02

(54) **GAS TURBINE ENGINE NACELLE ANTI-ICING SYSTEM**
ENTEISUNGSSYSTEM FÜR GASTURBINENMOTORGONDEL
SYSTÈME ANTIGIVRAGE DE NACELLE DE MOTEUR À TURBINE À GAZ

(30) Priority: 08.12.2014 US 201462089016 P
(43) Date of publication of application: 15.06.2016
(73) Proprietor: United Technologies Corporation, Farmington, CT 06032 (US)
(72) Inventor: MARCHAJ, Ian T., Windsor Locks, CT Connecticut 06096 (US)
(74) Representative: Dehns

(56) References cited:
- WO-A1-2014/134040
- WO-A1-2014/155009
- GB-A- 2 204 361
- US-A1- 2014 205 446

## Description

### BACKGROUND

This disclosure relates to a gas turbine engine de-icing system used, for example, for a fan nacelle.

A gas turbine engine typically includes a fan section, a compressor section, a combustor section and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

Gas turbine engine inlet components, such as the fan nacelle, are subject to icing during some engine operating conditions. Ice accumulation at the engine inlet can adversely impact engine operation. To this end, de-icing systems are used to melt any ice on the engine's inlet surfaces.

One example de-icing system uses electrically operated resistive elements embedded in the nacelle inlet walls. These resistive elements are powered by a generator driven by the engine. The generators must be sized to power the resistive elements, which represent a parasitic load on the engine.

Another example de-icing system uses a spray ring arranged in a D-duct, which provides the inlet surface of the fan nacelle. Bleed air from the compressor section is provided to the spray ring to direct hot air onto the inlet wall. Since work has already been done to this hot air by the compressor section, engine efficiency is reduced.

WO 2014/134040 A1 discloses a prior art gas turbine engine de-icing system in accordance with the preamble of claim 1.

US 2014/205446 A1 discloses a prior art oil cooling system.

### SUMMARY

According to the invention, there is provided a gas turbine engine de-icing system as set forth in claim 1.

In an embodiment of the above, the heat exchanger is arranged in a passageway and is configured to be exposed to an airflow.

In a further embodiment of any of the above, there is a fan nacelle and a core nacelle that provide a bypass flow path. The passageway is in fluid communication with the bypass flow path.

In a further embodiment of any of the above, a door is arranged in the passageway. The controller is configured to operatively communicate with the door to selectively regulate the airflow through the passageway.

In a further embodiment of any of the above, the coolant is a phase change fluid.

In a further embodiment of any of the above, the coolant changes phase from a liquid to a gas or saturated vapor in a range of 200°F-500°F (93°C-260°C).

In a further embodiment of any of the above, the gas turbine engine inlet structure is a fan nacelle and the manifold is an annular spray bar that is arranged in the fan nacelle.

In a further embodiment of any of the above, at least one of a gearbox and bearing system is in fluid communication with the engine oil loop.

In a further embodiment of any of the above, the gearbox operatively connects a turbine section to a fan section.

There is further provided a method of de-icing a gas turbine engine component as set forth in claim 10.

In a further embodiment of the above method, the engine oil circulating step includes pumping the engine oil from at least one of a gearbox and bearing system.

In a further embodiment of any of the above methods, the heat exchanger is arranged in a passageway and the method comprises the step of providing an airflow through the passageway to cool the engine oil.

In a further embodiment of any of the above, the method includes the step of regulating the airflow through the passageway based upon a desired heat transfer within the heat exchanger.

In a further embodiment of any of the above, the coolant is a phase change fluid. The method may further comprise the step of spraying gaseous or saturated vapor coolant onto the gas turbine engine inlet component to de-ice the gas turbine engine inlet component and condensing the gaseous or saturated vapor coolant to a liquid coolant with the de-iced gas turbine engine inlet component.

In a further embodiment of any of the above, the method includes the step of collecting the condensed liquid coolant in a reservoir.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2 is a schematic view of a portion of the example de-icing system.
Figure 3 schematically illustrates another portion of the de-icing system shown in Figure 2.
Figure 4 is a phase change diagram of the coolant used in the de-icing system.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

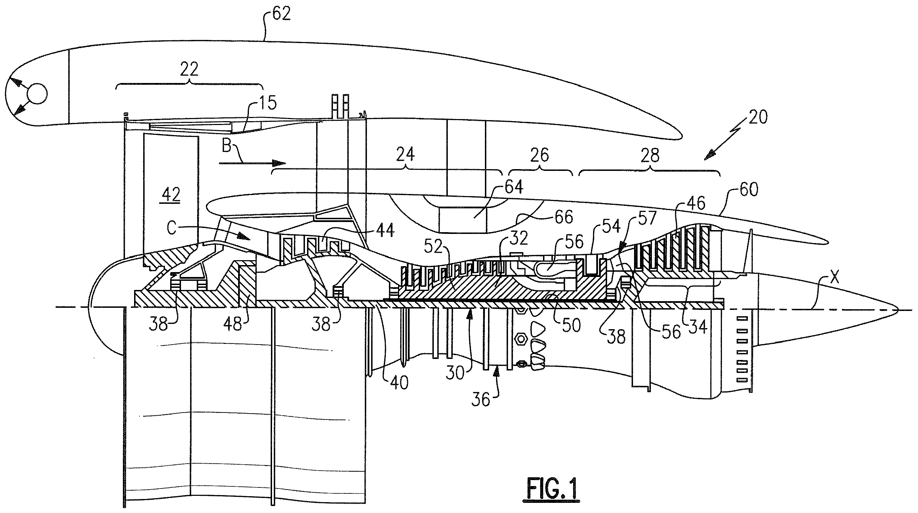

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct 15 defined within a nacelle, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures and single-spool architectures.

The exemplary engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis X which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)] / (518.7 °R)]^{0.5}. The "Low corrected fan tip speed" as disclosed herein according to one non-limiting embodiment is less than about 1150 ft / second (350.5 meters/second).

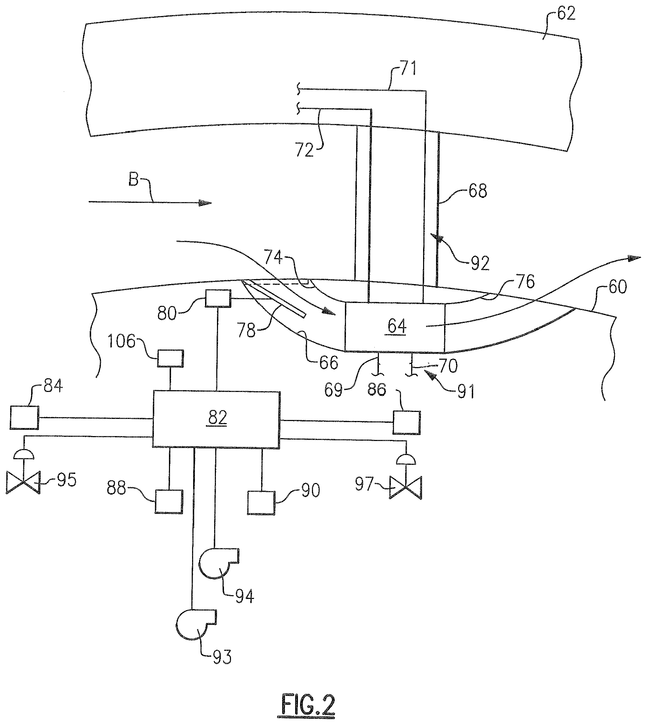

The engine 20 includes a core nacelle 60 and a fan nacelle 62. A fan nacelle 62 provides an inlet to the engine 20. A passageway 66 is arranged in the core nacelle 60 to provide an air flow from the bypass flow path through the passageway. A heat exchanger 64 is arranged in the passageway 66, as best shown in Figure 2.

The heat exchanger 64 is in fluid communication with an engine oil loop 91 that includes oil lines 69, 70. A coolant loop 92 is also in fluid communication with the heat exchanger and includes coolant lines 71, 72. The coolant lines 72 extend from the heat exchanger 64 through a bifurcation 68 arranged in the bypass flow path and interconnecting the core nacelle 60 to the fan nacelle 62.

The passageway 66 provides an inlet 74 and an exit 76. Air flow through the passageway 66 may be selectively regulated by a door 78 that opens and closes in response to an actuator 80. A controller 82 communicates with the actuator 80 to command a position of the door 78 in response to inputs, such as a manual input 84 from a pilot or an automatic input 86 based upon an icing algorithm, for example. The controller 82 communicates with various sensors 88, 90, such as temperature and pressure sensors, which can be used to predict an icing condition and desired heat transfer characteristics of the heat exchanger based upon engine operation.

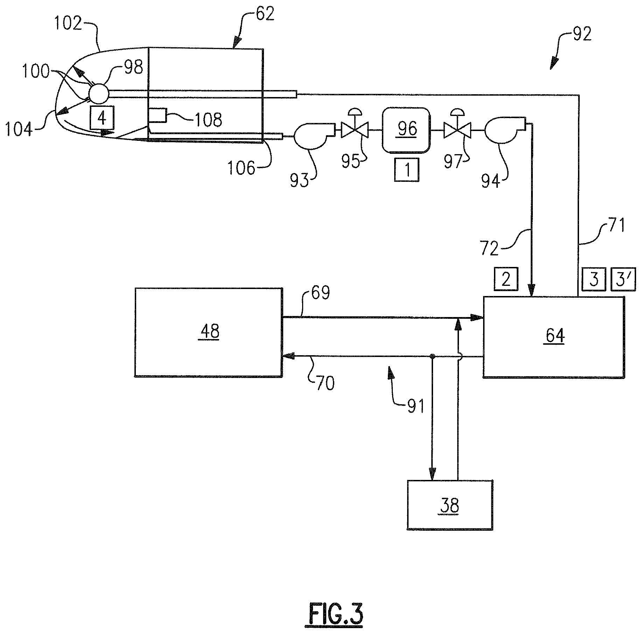

Referring to Figure 3, the engine oil loop 91 circulates lubrication oil from the geared architecture 48 and/or the bearings 38 to the heat exchanger 64 for cooling. The coolant loop 92 circulates a coolant to a manifold, such as an annular spray bar 98, arranged in a cavity of the D-duct 102 of the fan nacelle 92.

The coolant is a phase change fluid, for example, that changes phase from a liquid to a gas or saturated vapor in an operating range of the engine oil, such as a range of 200°F-500°F (93°C-260°C). One example phase change fluid is ammonia 2, 3, 3, 3-tetrafluoropropene, 2, 2-dichloro-1, 1, 1-trifluoroethane, although it should be understood that other phase change fluids may also be used.

A fluid reservoir 96 and first and second pumps 93, 94 are arranged in the coolant loop 92. First and second valves 95, 97 are provided respectively between the first and second pumps 93, 94 and the reservoir 96.

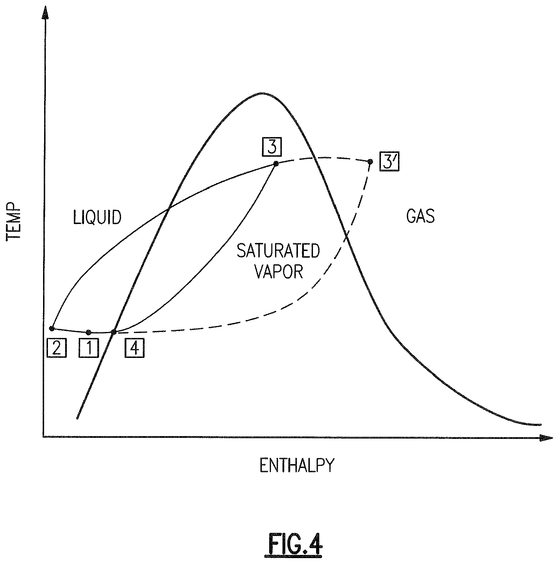

Referring to Figures 3 and 4, the coolant at location 1 is a liquid. The liquid coolant is pumped from the reservoir 96 with second pump 94 to the heat exchanger 64 to location 2 where heat is transferred from the engine oil to the coolant. The enthalpy of the liquid coolant is increased by the engine oil and circulated to the annular spray bar 98. The hot gaseous coolant is sprayed through holes 100 in the annular spray bar 98 as a saturated vapor 3 or a gas 3' onto an inner surface of the D-duct 102. Ice on an exterior surface 104 of the D-duct 102 is melted as heat is transferred from the hot gaseous coolant or saturated vapor to the ice, which reduces the temperature of the gaseous coolant and condenses the coolant to a liquid at location 4.

The condensed liquid coolant flows from a drain 106 in the D-duct 102 back to the reservoir 96. A level sensor 108 communicates with the controller 82, which operates the first pump 93, which is used to maintain a desired condensate level within the reservoir 96. The first and second valves 95, 97, which are in communication with the controller 82, are operated to provide desired flow rates and volumes at various locations throughout the coolant loop 92.

It should also be understood that although a particular component arrangement is disclosed in the illustrated embodiment, other arrangements will benefit herefrom. For example, other gas turbine engine inlet structures may incorporate the disclosed de-icing arrangement. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A gas turbine engine de-icing system comprising:
a heat exchanger (64);
a coolant loop (92) in fluid communication with the heat exchanger (64) and configured to circulate a coolant;
an engine oil loop (91) in fluid communication with the heat exchanger (64) and configured to transfer heat to the coolant; and
a gas turbine engine inlet structure (62) including a cavity (102), and a manifold arranged in the cavity (102) and in fluid communication with the coolant loop (92);
**characterised in that**:
the manifold is configured to spray the coolant onto the gas turbine engine inlet structure (62) to de-ice the gas turbine engine inlet structure (62);
the coolant loop (92) includes a reservoir (96), a valve (95) and a pump (93) configured to circulate the coolant, the reservoir (96) arranged downstream from the manifold (98) and configured to collect the liquid; and
a controller (82) is in communication with a level sensor (108), the controller (82) configured to operate the pump (93) to maintain a desired condensate level in the reservoir (96) and configured to operate the valve (95) to provide desired flow rates and volumes at various locations throughout the coolant loop (92).

2. The system according to claim 1, wherein the heat exchanger (64) is arranged in a passageway (66) configured to be exposed to an airflow.

3. The system according to claim 2, comprising a fan nacelle (62) and a core nacelle (60) that provide a bypass flow path, the passageway (66) is in fluid communication with the bypass flow path.

4. The system according to claim 3, comprising a door (68) arranged in the passageway (66), the controller (82) configured to operatively communicate with the door (68) to selectively regulate the airflow through the passageway (66).

5. The system according to any preceding claim, wherein the coolant is a phase change fluid.

6. The system according to claim 5, wherein the coolant changes phase from a liquid to a gas or saturated vapor in a range of 200°F-500°F (93°C-260°C).

7. The system according to any preceding claim, wherein the gas turbine engine inlet structure is a or the fan nacelle (62), and the manifold is an annular spray bar (98) arranged in the fan nacelle (62).

8. The system according to any preceding claim, comprising at least one of a gearbox (48) and bearing system (38) in fluid communication with the engine oil loop (91).

9. The system according to claim 8, wherein the gearbox (48) operatively connects a turbine section (28) to a fan section (22).

10. A method of de-icing a gas turbine engine component comprising the steps of:
circulating an engine oil to a heat exchanger (64);
rejecting heat from the engine oil to a coolant in a coolant loop (92);
circulating the coolant in the coolant loop (92) to an gas turbine engine inlet component (62); and
de-icing the gas turbine engine inlet component (62) with the coolant;
**characterised in that**:
the coolant loop (92) comprises a reservoir (96), a pump (93) and a valve (95); and
the step of circulating the coolant further comprises providing a controller (82) communicating with a level sensor (108) to operate the pump (93), the pump (93) maintaining a desired condensate level in the reservoir (96), and to operate the valve (95), the valve providing desired coolant flow rates and volumes at various locations in the coolant loop (92).

11. The method according to claim 10, wherein the engine oil circulating step includes pumping the engine oil from at least one of a gearbox (48) and bearing system.

12. The method according to claim 10 or 11, wherein the heat exchanger (64) is arranged in a passageway (66), and comprising the step of providing an airflow through the passageway (66) to cool the engine oil.

13. The method according to claim 12, comprising the step of regulating the airflow through the passageway (66) based upon a desired heat transfer within the heat exchanger (64).

14. The method according to any of claims 10 to 13, wherein the coolant is a phase change fluid, and comprising the step of spraying gaseous or saturated vapor coolant onto the gas turbine engine inlet component (62) to de-ice the gas turbine engine inlet component, and condensing the gaseous or saturated vapor coolant to a liquid coolant with the de-iced gas turbine engine inlet component (62).

15. The method according to claim 14, comprising the step of collecting the condensed liquid coolant in the reservoir (96).

## Patentansprüche

1. Enteisungssystem für einen Gasturbinenmotor, umfassend:
einen Wärmetauscher (64);
einen Kühlmittelkreislauf (92) in Fluidkommunikation mit dem Wärmetauscher (64), der dazu konfiguriert ist, ein Kühlmittel zu zirkulieren;
einen Motorölkreislauf (91) in Fluidkommunikation mit dem Wärmetauscher (64), der dazu konfiguriert ist, Wärme auf das Kühlmittel zu übertragen; und
eine Einlassstruktur (62) des Gasturbinenmotors, die einen Hohlraum (102) und einen Verteiler, der im Hohlraum (102) angeordnet ist und mit dem Kühlmittelkreislauf (92) in Fluidkommunikation steht, beinhaltet;
**dadurch gekennzeichnet, dass**:
der Verteiler dazu konfiguriert ist, das Kühlmittel auf die Einlassstruktur (62) des Gasturbinenmotors zu sprühen, um die Einlassstruktur (62) des Gasturbinenmotors zu enteisen;
der Kühlmittelkreislauf (92) einen Sammelbehälter (96), ein Ventil (95) und eine Pumpe (93), die zum Zirkulieren des Kühlmittels konfiguriert ist, beinhaltet, wobei der Sammelbehälter (96) stromabwärts des Verteilers (98) angeordnet ist und zum Sammeln der Flüssigkeit konfiguriert ist; und
eine Steuerung (82) mit einem Pegelsensor (108) in Kommunikation steht, wobei die Steuerung (82) dazu konfiguriert ist, die Pumpe (93) zu betreiben, um einen gewünschten Kondensatpegel im Sammelbehälter (96) aufrechtzuerhalten, und dazu konfiguriert ist, das Ventil (95) zu betreiben, um gewünschte Strömungsraten und -volumen an verschiedenen Stellen im Kühlmittelkreislauf (92) bereitzustellen.

2. System nach Anspruch 1, wobei der Wärmetauscher (64) in einem Durchlass (66) angeordnet ist, der dazu konfiguriert ist, einem Luftstrom ausgesetzt zu werden.

3. System nach Anspruch 2, umfassend eine Lüftungsgondel (62) und eine Kerngondel (60), die einen Umgehungsströmungsweg bereitstellen, wobei der Durchlass (66) in Fluidkommunikation mit dem Umgehungsströmungsweg steht.

4. System nach Anspruch 3, umfassend eine im Durchlass (66) angeordnete Klappe (68), wobei die Steuerung (82) dazu konfiguriert ist, operativ mit der Klappe (68) zu kommunizieren, um den Luftstrom durch den Durchlass (66) selektiv zu regulieren.

5. System nach einem der vorhergehenden Ansprüche, wobei das Kühlmittel ein Phasenwechselfluid ist.

6. System nach Anspruch 5, wobei das Kühlmittel in einem Bereich von 200 °F-500 °F (93 °C-260 °C) die Phase von einer Flüssigkeit zu einem Gas oder gesättigten Dampf wechselt.

7. System nach einem der vorhergehenden Ansprüche, wobei die Einlassstruktur des Gasturbinenmotors eine oder die Lüftungsgondel (62) ist und der Verteiler eine in der Lüftungsgondel (62) angeordnete ringförmige Sprühvorrichtung (98) ist.

8. System nach einem der vorhergehenden Ansprüche, umfassend zumindest entweder einen Getriebekasten (48) oder ein Lagersystem (38) in Fluidkommunikation mit dem Motorölkreislauf (91).

9. System nach Anspruch 8, wobei der Getriebekasten (48) einen Turbinenabschnitt (28) und einen Lüftungsabschnitt (22) wirkverbindet.

10. Verfahren zum Enteisen einer Gasturbinenmotorkomponente, wobei das Verfahren die folgenden Schritte umfasst:
Zirkulieren eines Motoröls zu einem Wärmetauscher (64);
Abgeben von Wärme aus dem Motoröl an ein Kühlmittel in einem Kühlmittelkreislauf (92);
Zirkulieren des Kühlmittels im Kühlmittelkreislauf (92) zu einer Einlasskomponente (62) des Gasturbinenmotors; und
Enteisen der Einlasskomponente (62) des Gasturbinenmotors mithilfe des Kühlmittels;
**dadurch gekennzeichnet, dass**:
der Kühlmittelkreislauf (92) einen Sammelbehälter (96), eine Pumpe (93) und ein Ventil (95) umfasst; und
der Schritt des Zirkulierens des Kühlmittels ferner ein Bereitstellen einer Steuerung (82) in Kommunikation mit einem Pegelsensor (108) umfasst, um die Pumpe (93) zu betreiben, wobei die Pumpe (93) einen gewünschten Kondensatpegel im Sammelbehälter (96) aufrechterhält, und das Ventil (95) zu betreiben, wobei das Ventil gewünschte Kühlmittelströmungsraten und -volumen an verschiedenen Stellen im Kühlmittelkreislauf (92) bereitstellt.

11. Verfahren nach Anspruch 10, wobei der Schritt des Zirkulierens von Motoröl ein Pumpen des Motoröls aus zumindest entweder einem Getriebekasten (48) oder einem Lagersystem beinhaltet.

12. Verfahren nach Anspruch 10 oder 11, wobei der Wärmetauscher (64) in einem Durchlass (66) angeordnet ist, und umfassend den Schritt eines Bereitstellens eines Luftstroms durch den Durchlass (66) zum Kühlen des Motoröls.

13. Verfahren nach Anspruch 12, umfassend den Schritt eines Regulierens des Luftstroms durch den Durchlass (66) auf Grundlage einer gewünschten Wärmeübertragung im Wärmetauscher (64).

14. Verfahren nach einem der Ansprüche 10 bis 13, wobei das Kühlmittel ein Phasenwechselfluid ist, und umfassend den Schritt eines Sprühens des Kühlmittels in Gas- oder gesättigter Dampfform auf die Einlasskomponente (62) des Gasturbinenmotors zum Enteisen der Einlasskomponente des Gasturbinenmotors und eines Kondensierens des Kühlmittels in Gas- oder gesättigter Dampfform zu einem flüssigen Kühlmittel mithilfe der enteisten Einlasskomponente (62) des Gasturbinenmotors.

15. Verfahren nach Anspruch 14, umfassend den Schritt eines Sammelns des kondensierten flüssigen Kühlmittels im Sammelbehälter (96).

## Revendications

1. Système de dégivrage de moteur à turbine à gaz comprenant :
un échangeur de chaleur (64) ;
une boucle de réfrigérant (92) en communication fluidique avec l'échangeur de chaleur (64) et configurée pour faire circuler un réfrigérant ;
une boucle d'huile moteur (91) en communication fluidique avec l'échangeur de chaleur (64) et configurée pour transférer de la chaleur au réfrigérant ; et
une structure d'entrée de moteur à turbine à gaz (62) comprenant une cavité (102), et un collecteur agencé dans la cavité (102) et en communication fluidique avec la boucle de réfrigérant (92) ;
**caractérisé en ce que** :
le collecteur est configuré pour pulvériser le réfrigérant sur la structure d'entrée de moteur à turbine à gaz (62) pour dégivrer la structure d'entrée de moteur à turbine à gaz (62) ; la boucle de réfrigérant (92) comprend un réservoir (96), une soupape (95) et une pompe (93) configurée pour faire circuler le réfrigérant, le réservoir (96) étant agencé en aval du collecteur (98) et configuré pour collecter le liquide ; et
un dispositif de commande (82) est en communication avec un capteur de niveau (108), le dispositif de commande (82) étant configuré pour faire fonctionner la pompe (93) pour maintenir un niveau de condensat souhaité dans le réservoir (96) et configuré pour faire fonctionner la soupape (95) pour fournir des débits et volumes souhaités à différents endroits à travers la boucle de réfrigérant (92).

2. Système selon la revendication 1, dans lequel l'échangeur de chaleur (64) est agencé dans un passage (66) configuré pour être exposé à un flux d'air.

3. Système selon la revendication 2, comprenant une nacelle de ventilateur (62) et une nacelle centrale (60) qui fournissent un trajet de flux de dérivation, le passage (66) est en communication fluidique avec le trajet de flux de dérivation.

4. Système selon la revendication 3, comprenant une porte (68) agencée dans le passage (66), le dispositif de commande (82) étant configuré pour communiquer fonctionnellement avec la porte (68) pour réguler sélectivement le flux d'air à travers le passage (66).

5. Système selon une quelconque revendication précédente, dans lequel le réfrigérant est un fluide à changement de phase.

6. Système selon la revendication 5, dans lequel le réfrigérant change de phase d'un liquide à un gaz ou vapeur saturée dans une plage de 200 °F-500 °F (93 °C-260 °C).

7. Système selon une quelconque revendication précédente, dans lequel la structure d'entrée de moteur à turbine à gaz est une ou la nacelle de ventilateur (62), et le collecteur est une barre de pulvérisation annulaire (98) agencée dans la nacelle de ventilateur (62).

8. Système selon une quelconque revendication précédente, comprenant au moins un parmi une transmission (48) et un système de palier (38) en communication fluidique avec la boucle d'huile moteur(91).

9. Système selon la revendication 8, dans lequel la transmission (48) relie fonctionnellement une section turbine (28) à une section ventilateur (22).

10. Procédé de dégivrage d'un composant de moteur à turbine à gaz comprenant les étapes de :
circulation d'une huile moteur vers un échangeur de chaleur (64) ;
rejet de chaleur de l'huile moteur à un réfrigérant dans une boucle de réfrigérant (92) ;
circulation du réfrigérant dans la boucle de réfrigérant (92) vers un composant d'entrée de moteur à turbine à gaz (62) ; et
dégivrage du composant d'entrée de moteur à turbine à gaz (62) avec le réfrigérant ;
**caractérisé en ce que** :
la boucle de réfrigérant (92) comprend un réservoir (96), une pompe (93) et une soupape (95) ; et
l'étape de circulation du réfrigérant comprend en outre la fourniture d'un dispositif de commande (82) communiquant avec un capteur de niveau (108) pour faire fonctionner la pompe (93), la pompe (93) maintenant un niveau de condensat souhaité dans le réservoir (96), et pour faire fonctionner la soupape (95), la soupape fournissant des débits et volumes de réfrigérant souhaités à différents endroits dans la boucle de réfrigérant (92).

11. Procédé selon la revendication 10, dans lequel l'étape de circulation d'huile moteur comprend le pompage de l'huile moteur d'au moins un parmi une transmission (48) et un système de palier.

12. Procédé selon la revendication 10 ou 11, dans lequel l'échangeur de chaleur (64) est agencé dans un passage (66), et comprenant l'étape de fourniture d'un flux d'air à travers le passage (66) pour refroidir l'huile moteur.

13. Procédé selon la revendication 12, comprenant l'étape de régulation du flux d'air à travers le passage (66) sur la base d'un transfert de chaleur souhaité à l'intérieur de l'échangeur de chaleur (64).

14. Procédé selon l'une quelconque des revendications 10 à 13, dans lequel le réfrigérant est un fluide à changement de phase, et comprenant l'étape de pulvérisation de réfrigérant gazeux ou à vapeur saturée sur le composant d'entrée de moteur à turbine à gaz (62) pour dégivrer le composant d'entrée de moteur à turbine à gaz, et de condensation du réfrigérant gazeux ou à vapeur saturée en un réfrigérant liquide avec le composant d'entrée de moteur à turbine à gaz dégivré (62).

15. Procédé selon la revendication 14, comprenant l'étape de collecte du réfrigérant liquide condensé dans le réservoir (96).
